# EUROPEAN PATENT SPECIFICATION

(11) **EP 4 208 006 B1**
(45) Date of publication and mention of the grant of the patent: **27.08.2025**
(21) Application number: 20951845.5
(22) Date of filing: 04.09.2020
(51) Int. Cl.: A01D 41/06, A01D 34/42, A01D 47/00, A01D 57/20

(54) **DRAPER HEADER WITH TENSION DRAPER TRACK ASSEMBLY**
SCHNEIDWERK MIT VORSPANNVORRICHTUNG FÜR DIE FÖRDERBANDSCHIENEN
COLLECTEUR DE CONVOYEUR À TOILE DOTÉ D'UN ENSEMBLE DE TENSION DE CHENILLE DE CONVOYEUR À TOILE

(43) Date of publication of application: 12.07.2023
(73) Proprietor: MacDon Industries Ltd., Winnipeg Manitoba R3J 3S3 (CA)
(72) Inventor: GRENIER, Eric, Winnipeg, Manitoba R3P 1J9 (CA); TALBOT, Frank, Winnipeg, Manitoba R2N 3M5 (CA); COUDIERE, Romain, 28150 Ymonville (FR)
(74) Representative: Jostarndt Patentanwalts-AG
(86) International application number: PCT/CA2020/000108
(87) International publication number: WO 2022/047569

(56) References cited:
- WO-A1-2019/023238
- WO-A1-2019/111069
- US-A1- 2014 059 995
- US-A1- 2017 215 342
- US-B1- 8 511 050

## Description

### BACKGROUND OF THE INVENTION

### 1. Field of the Invention

The present invention relates to a draper header for harvesting agricultural crops.

### 2. Description of Related Art

Draper headers for harvesting agricultural crops are known in the art. Typical draper headers include a header frame extending longitudinally between opposite first and second ends. At least a first support leg and a second support leg are spaced apart between the first and second ends of the header frame. A draper belt is rotatably supported by the header frame and extends across the first and second support legs for transporting harvested agricultural crops, and a draper track is coupled between the first and second support legs for supporting at least a portion of the draper belt. The draper track extends between a first end and an opposite second end. The first end of the draper track is secured to one of the first and second support legs, and the second end of the draper track is secured to the other of the first and second support legs. However, draper tracks on draper headers known in the art typically require a substantial cross-section for extending between the first and second support legs and adequately supporting the draper belt, which results in a potentially heavy and costly component.

Further draper headers are e.g. known from US 2014/059995 A1, WO 2019/111069 A1 and WO 2019/023238 A1.

### SUMMARY OF THE INVENTION

According to one aspect of the invention, a draper header is provided for harvesting agricultural crops. A header frame extends longitudinally between opposite first and second ends. At least a first support leg and a second support leg are spaced apart between the first and second ends of the header frame. A draper belt is rotatably supported by the header frame and extends across the first and second support legs for transporting harvested agricultural crops. A tension draper track assembly is operatively coupled between the first and second support legs for supporting at least a portion of the draper belt. The tension draper track assembly includes an elongated draper track extending between a first end and an opposite second end. The second end of the elongated draper track is secured to one of the first and second support legs, and a tensioning mechanism is coupled between the first end of the elongated draper track and the other of the first and second support legs. The tensioning mechanism tensions the elongated draper track across the first and second support legs for supporting the draper belt.

According to another aspect of the invention, a draper header is provided for harvesting agricultural crops. A header frame extends longitudinally between opposite first and second ends. At least a first support leg and a second support leg are spaced apart between the first and second ends of the header frame. A draper belt is rotatably supported by the header frame and extends across the first and second support legs for transporting harvested agricultural crops. A tension draper track assembly is operatively coupled between the first and second support legs for supporting at least a portion of the draper belt. The tension draper track assembly includes at least a first elongated draper track and a second elongated draper track, and each first and second elongated draper track extends between a first end and an opposite second end. The second end of the first elongated draper track is secured to the first support leg, and the second end of the second elongated draper track is secured to the second support leg. A tensioning mechanism is coupled between the first end of the first elongated draper track and the first end of the second elongated draper track for tensioning the first and second elongated draper tracks across the first and second support legs to support the draper belt.

### BRIEF DESCRIPTION OF THE DRAWINGS

Advantages of the present disclosure will be readily appreciated as the same becomes better understood by reference to the following detailed description when considered in connection with the accompanying drawings, wherein:
Figure 1 is a perspective view of a draper header according to a primary embodiment of the present invention;
Figure 2 is a fragmentary perspective view of the draper header of Figure 1;
Figure 3 is a fragmentary bottom view of the draper header of Figure 1;
Figure 4 is a fragmentary cross-sectional side view of the draper header of Figure 1;
Figure 5 is an enlarged fragmentary perspective view of the draper header of Figure 1 showing a draper track of a tension draper track assembly supporting a side draper belt;
Figure 6 is a fragmentary perspective view of the draper header of Figure 1 showing a return run of the side draper belt supported by the tension draper track assembly;
Figure 7 is an enlarged fragmentary front view of the draper header of Figure 1 showing a bracket attached to a first support leg for securing the draper track;
Figure 8 is an enlarged fragmentary perspective view of the draper header of Figure 1 showing a tensioning mechanism of the tension draper track assembly;
Figure 9 is an enlarged fragmentary bottom view of the draper header of Figure 1 further showing the tensioning mechanism of the tension draper track assembly;
Figure 10A is a fragmentary cross-sectional view of the draper track of the draper header of Figure 1 with a first side of the draper track covered in a low friction, wear-resistant material;
Figure 10B is a fragmentary cross-sectional view of the draper track of the draper header of Figure 1 with both the first side and a second side of the draper track covered in the low friction, wear-resistant material;
Figure 11 is a fragmentary perspective view of the draper header of Figure 1 showing a pair of low-friction elements flanking the draper track;
Figure 12 is a fragmentary bottom view of the draper header according to an alternative embodiment of the present invention;
Figure 13 is a fragmentary front view of the draper header of Figure 12; and
Figure 14 an enlarged fragmentary bottom view of the draper header of Figure 12 showing the alternative tensioning mechanism.

### DETAILED DESCRIPTION OF THE EMBODIMENTS

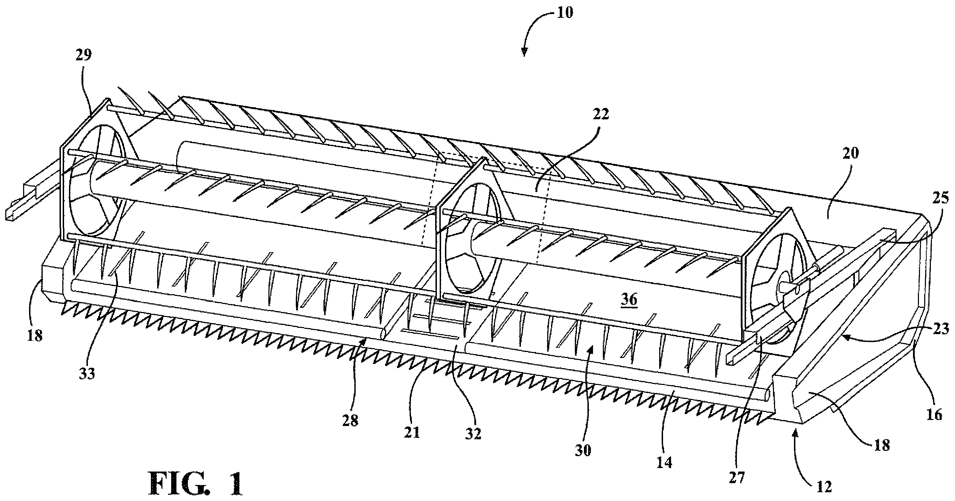

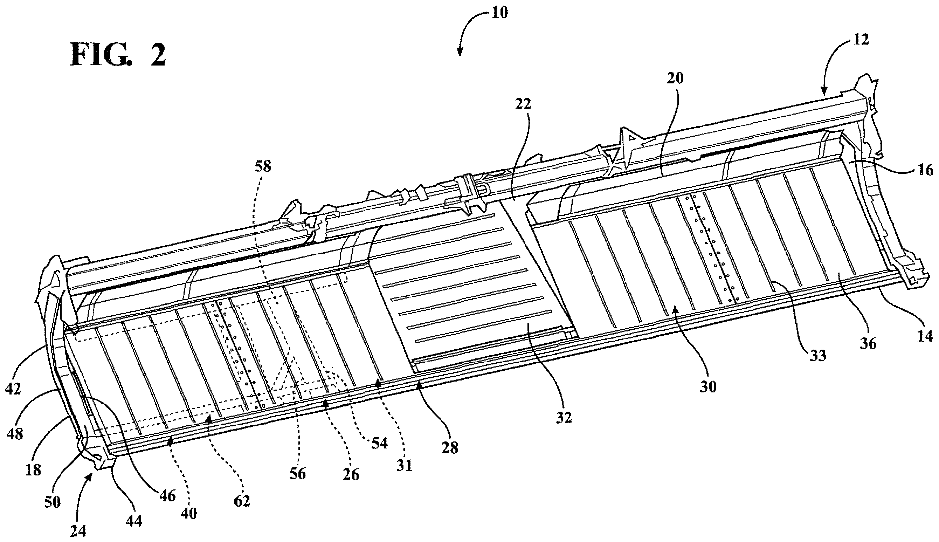

Referring to the Figures, wherein like numerals indicate like or corresponding parts throughout the several views, a draper header for harvesting agricultural crops is shown generally at 10. The draper header 10 includes a header frame 12 with a front portion 14 and a rear portion 16 extending laterally between opposite ends 18. A rear wall 20 extends substantially vertically along the rear portion 16 of the header frame 12 between the opposite ends 18 thereof. Referring to Figure 1, a cutter bar assembly 21 operatively extends across the front portion 14 of the header frame 12 between the opposite ends 18 for cutting the crops to be harvested. The draper header 10 further includes at least one pair of support arms 23 which extend between a proximal end 25 coupled to the rear portion 16 of the header frame 12 and an opposite distal end 27 spaced above the front portion 14 of the header frame 12. At least one crop pick-up reel 29 is slidably and rotatably coupled between the support arms 23 for engaging the crops to be harvested. Referring to Figures 1 and 2, the rear wall 20 includes an opening 22 for transferring crops away from the draper header 10, generally for further processing by an agricultural machine such as a combine or for creation of windrows by a swather. However, it is to be appreciated that the crops may be transferred from the draper header for any number of other suitable purposes without varying the scope of the invention.

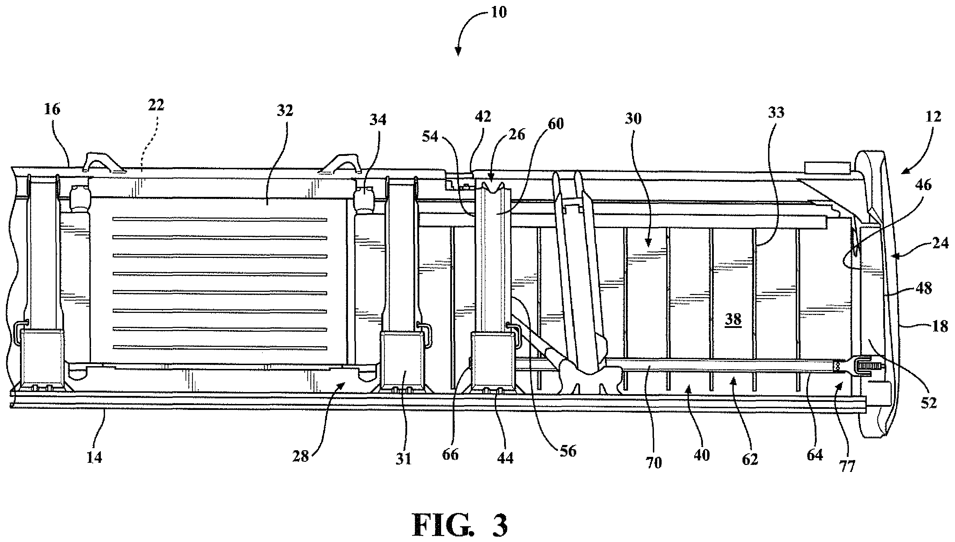

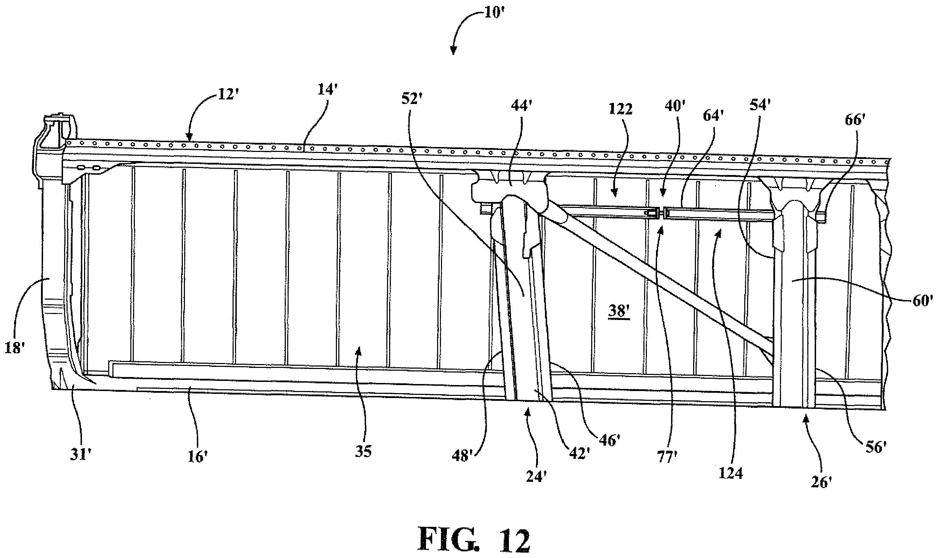

Referring to Figure 2, a draper belt assembly 28 is rotatably supported by the header frame 12 for transporting harvested agricultural crops to the opening 22 in the rear wall 20. The draper belt assembly 28 includes an endless center draper belt 32 flanked by first and second endless side draper belts 30. Referring to Figure 3, each first and second side draper belt 30 extends across a pair of laterally spaced-apart first and second support legs 24, 26 extending between the front and rear portions 14, 16 of the header frame 12. The draper header 10 may also include a plurality of similar auxiliary support legs 31 extending between the front and rear portions 14, 16 of the header frame 12 for further stability and support of the header frame 12 and for coupling with additional draper header components, such as a transport system or a gauge wheel system. However, it is to be appreciated that any number or configuration of draper belts, support legs, and auxiliary support legs may be utilized on the draper header without varying the scope of the invention. For example, as shown in Figure 12, the draper header 10 may alternatively include a single draper belt 35 rotatably supported by the header frame 12.

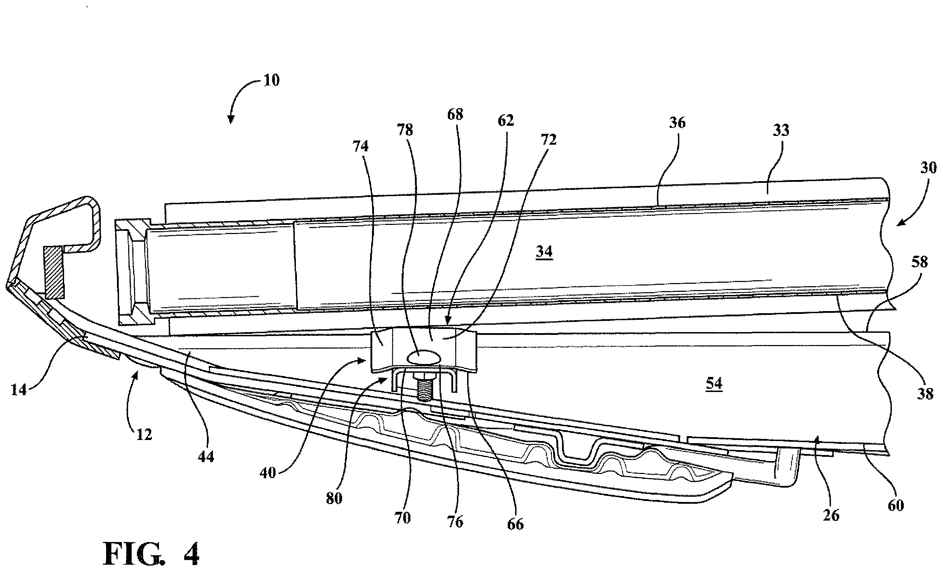

Referring to Figures 1 and 2, the first and second side draper belts 30 are disposed on opposite sides of the center draper belt 32 and run perpendicularly thereto for transporting the harvested crops to the center draper belt 32. The center draper belt 32 then directs the harvested crops through the opening 22 in the rear wall 20. Referring to Figures 3 and 4, each first and second side draper belt 30 is tensioned between a pair of laterally spaced-apart rollers 34 rotatably coupled between the front and rear portions 14, 16 of the header frame 12. The first and second side draper belts 30 each include a plurality of cleats 33 extending transversely across and outwardly therefrom, as shown in Figures 1-4, for aiding in transporting the harvested crops to the center draper belt 32. However, it is to be appreciated that the draper header may alternatively omit the cleats without varying the scope of the invention. Referring to Figure 4, each first and second side draper belt 30 includes a top run 36 spaced by the rollers 34 parallel and above an opposite return run 38. The return run 38 of each first and second side draper belt 30 and the cleats 33 extending therefrom are supported by a tension draper track assembly 40 operatively coupled between each respective pair of first and second support legs 24, 26, as shown in Figures 3 and 4.

Referring to Figures 2 and 3, each first and second support leg 24, 26 extends between an aft end 42 coupled to the rear portion 16 of the header frame 12 and a fore end 44 coupled to the front portion 14 of the header frame 12. The first support legs 24 have opposite medial and lateral side walls 46, 48 extending between a horizontal top side 50 and a horizontal bottom side 52. Similarly, the second support legs 26 have opposite medial and lateral side walls 54, 56 extending between a horizontal top side 58 and a horizontal bottom side 60. The first support legs 24 are positioned at or adjacent the opposite ends 18 of the header frame 12, and the second support legs 26 are medially spaced from the first support legs 24 on each side of the opening 22 in the rear wall 20, as shown in Figures 2 and 3. Alternatively, both the first and second support legs 24, 26 may instead be laterally spaced from the opposite ends 18 of the header frame 12, as shown in Figure 12, such that one of the auxiliary support legs 31 is instead positioned at each opposite end 18 of the header frame 12.

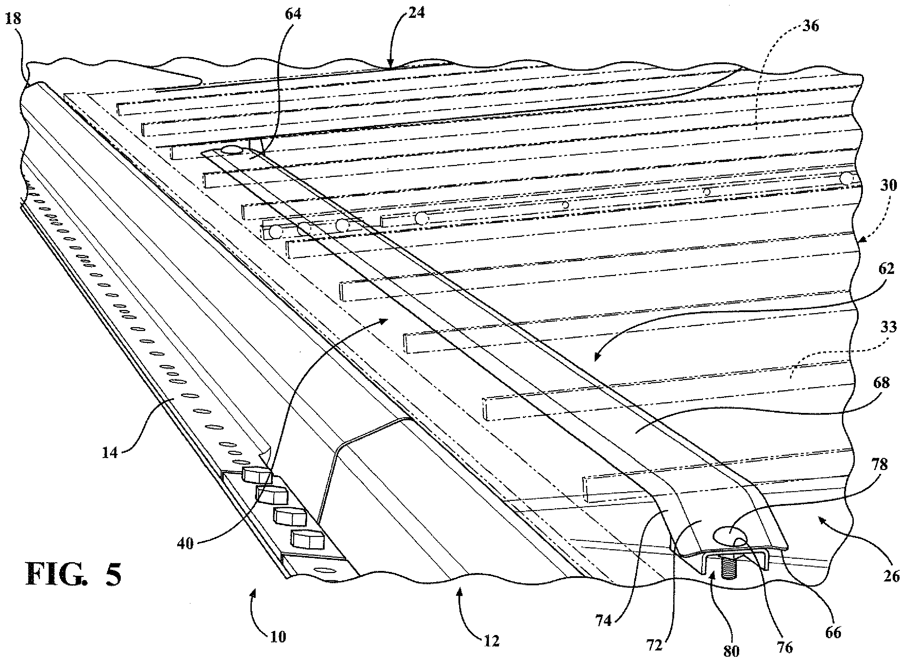

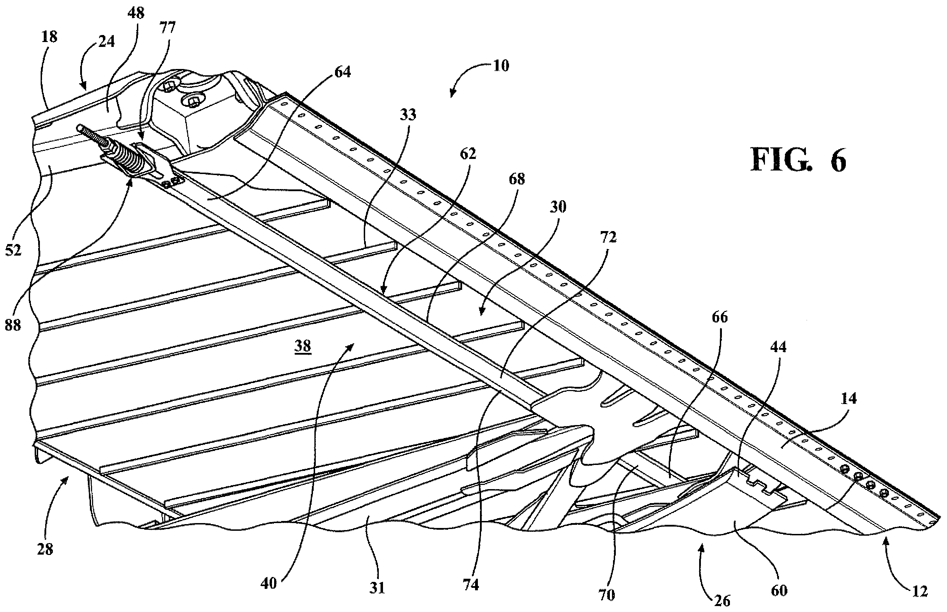

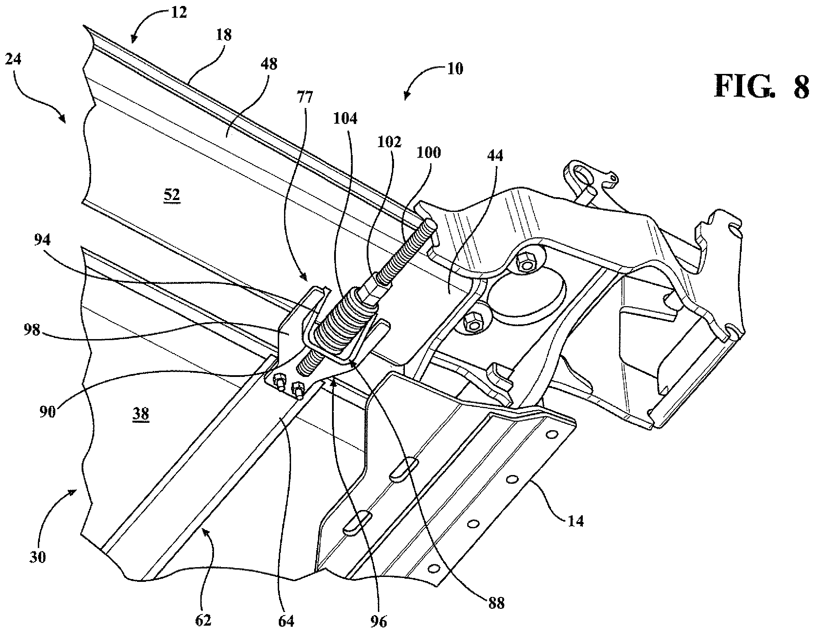

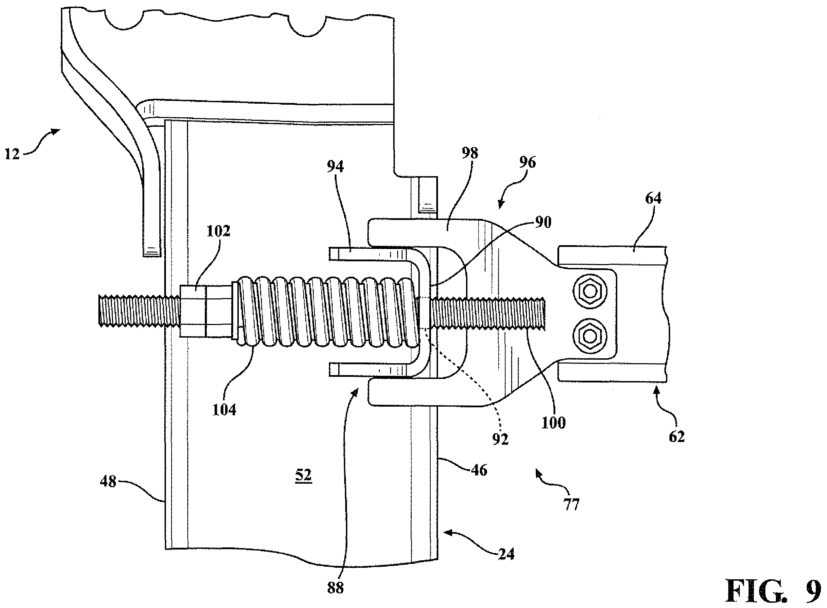

Referring to Figures 3-5, each tension draper track assembly 40 includes an elongated draper track 62 extending between a first end 64 and an opposite second end 66 operatively coupled to and tensioned between the respective pair of first and second support legs 24, 26 for supporting the return runs 38 of the first and second side draper belts 30 and the cleats 33 extending therefrom. Each draper track 62 has a first side 68 and an opposite second side 70 with a generally planar cross-section defined by a horizontal upper portion 72 extending laterally between a pair of downwardly angled side portions 74, as shown in Figures 4-6. Alternatively, the draper tracks 62 may omit the downwardly angled side portions 74 entirely. The draper track 62 may be a lightweight steel cross-section; however, it is appreciated that any suitable material may be used for the draper track without varying the scope of the invention. The first sides 68 of the draper tracks 62 are arranged to face and engage the return runs 38 of the first and second side draper belts 30 and the cleats 33 extending therefrom, as shown in Figures 4 and 6. Referring to Figures 4, 5, and 7, at least one hole 76 extends through each draper track 62 adjacent the second end 66 thereof for coupling the second ends 66 of the draper tracks 62 to the respective second support legs 26. Additionally, a tensioning mechanism 77, shown in Figures 8 and 9, is coupled between the first end 64 of each draper track 62 and the respective first support leg 24 for tensioning the draper tracks 62 across the pairs of first and second support legs 24, 26 between the first and second ends 64, 66.

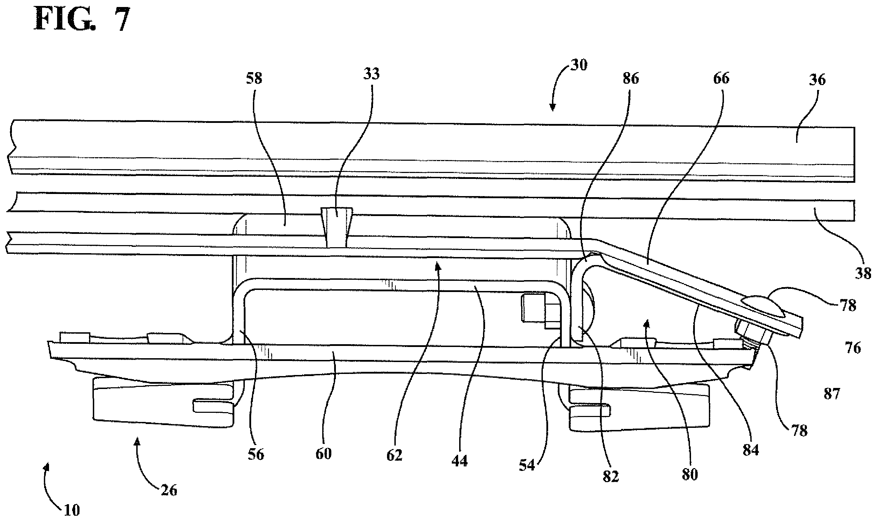

Referring to Figure 7, a coupling bracket 80 is secured to and extends substantially perpendicularly from the medial side wall 54 of each second support leg 26 adjacent the fore end 44 thereof. Each coupling bracket 80 includes a vertical face 82 intersecting with a longitudinal face 84 at a top edge 86. The vertical face 82 is engaged with and secured to the medial side wall 54 of the respective second support leg 26, and the longitudinal face 84 extends outwardly and downwardly from the vertical face 82 at the top edge 86. Each longitudinal face 84 includes at least one hole 87 extending therethrough. The holes 87 in each longitudinal face 84 align with the holes 76 adjacent the second end 66 of each draper track 62 for receiving at least one fastener 78 or another suitable securing mechanism therethrough to secure the second end 66 of each draper track 62 to the respective second support leg 26, as shown in Figures 4, 5, and 7.

Referring to Figures 8 and 9, a tensioning bracket 88 with a generally C-shaped cross-section extends downwardly from the bottom side 52 of each of the first support legs 24 for coupling with the tensioning mechanisms 77 of the tension draper track assemblies 40. The tensioning brackets 88 are defined by a substantially planar face 90 flanked by a pair of side supports 94. The planar face 90 extends parallel to the medial and lateral side walls 46, 48 of the first support legs 24, and the side supports 94 extend substantially perpendicularly to the planar face 90. Each planar face 90 further includes a hole 92 extending therethrough, as shown in Figure 9. Referring to Figures 8 and 9, each tensioning mechanism 77 includes a tensioning element 96 secured to the first end 64 of each draper track 62. The tensioning elements 96 include a pair of spaced apart longitudinally-extending arms 98 flanking a longitudinally-extending threaded post 100. The hole 92 in each tensioning bracket 88 receives the threaded post 100 extending from the respective tensioning element 96, and the arms 98 of the tensioning elements 96 extend alongside and engage the side supports 94 of the tensioning brackets 88 to limit rotation of the tension draper track assemblies 40 between the threaded posts 100 and the tensioning brackets 88. However, it is to be appreciated that the tensioning mechanisms may alter or omit the arms on the tensioning element, or may utilize an alternative method of reducing rotation of the tension draper track assemblies, without varying the scope of the invention.

Referring to Figures 8 and 9, each tensioning mechanism 77 further includes at least one fastening element 102, such as bolts, or another suitable securing mechanism coupled to the threaded post 100 to secure the threaded post 100 through the hole 92 in the tensioning bracket 88, thereby tensioning the draper tracks 62 across the first and second support legs 24, 26. Each tensioning mechanism 77 also includes a coil spring 104 mounted on the threaded post 100 and at least partially compressed between the tensioning bracket 88 and the fastening elements 102 to dampen vibrations and limit loading in the draper tracks 62 during use of the draper header 10. However, any suitable shock-absorbing element, such as an elastomeric component, may alternatively be placed between the tensioning bracket and the fastening element without varying the scope of the invention. The tension of each draper track 62 across the respective first and second support legs 24, 26 can be selectively increased or decreased by rotating, and thereby tightening and loosening, the fastening elements 102 on the threaded posts 100. More specifically, as the fastening element 102 is rotated in a first direction on the threaded post 100, the spring 104 is compressed between the fastening element 102 and the tensioning bracket 88 and the threaded post 100 is pulled to increase the tension on each draper track 62. Alternatively, as the fastening element 102 is rotated in an opposite second direction on the threaded post 100, the threaded post 100 is pushed to decrease the tension on each draper track 62. The tension created on the draper tracks 62 allows for smaller and lighter weight draper tracks 62 for supporting the draper belts 30.

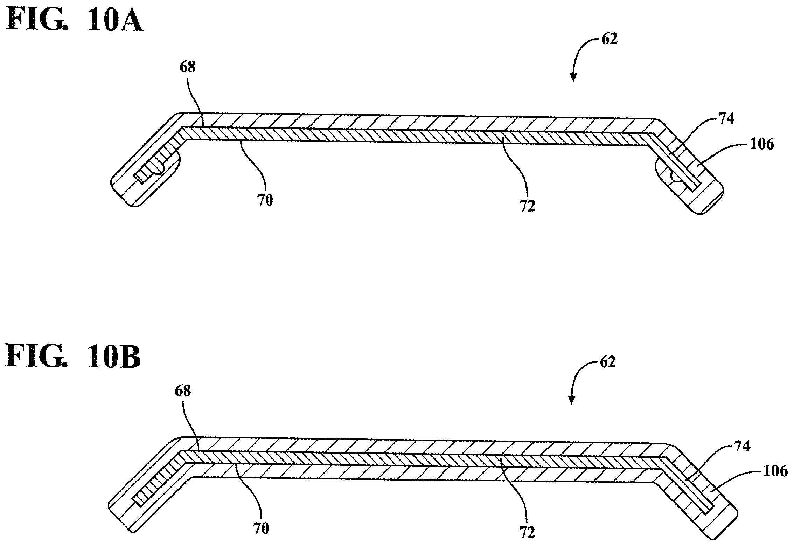

To reduce friction and wear between the draper tracks 62 and the return runs 38 of the first and second side draper belts 30, including the cleats 33 extending therefrom, the draper tracks 62 may be covered with a low-friction, wear-resistant material 106, such as a polyethylene strip, sleeve, or coating, polyester webbing, aramid fiber covering, or any other suitable low-friction material. The first sides 68 of the draper tracks 62 engaged with the cleats 33 of the first and second side draper belts 30 may be covered in the low-friction material 106, as shown in Figure 10A, or the low-friction material 106 may instead be co-extruded with the draper tracks 62 to enclose both the first and second sides 68, 70 of the draper tracks 62 in the low-friction material 106, as shown in Figure 10B.

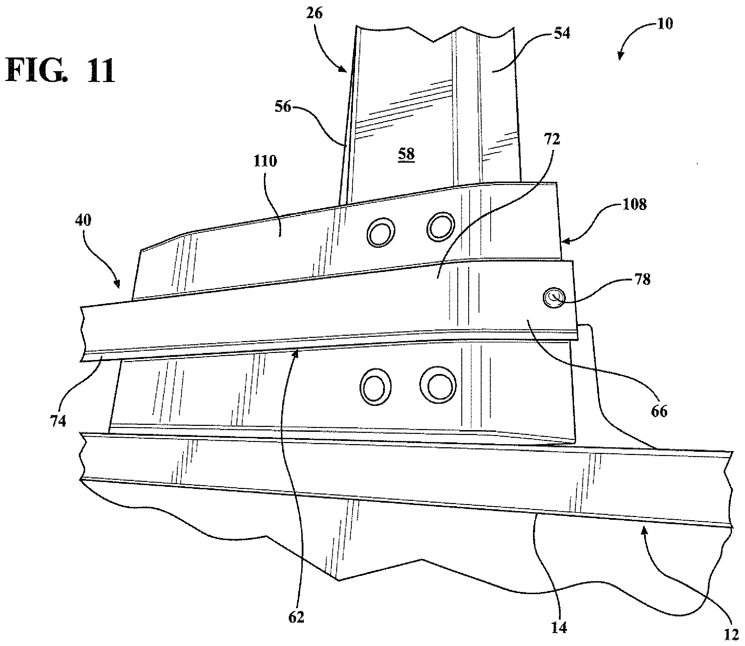

Alternatively, referring to Figure 11, the tension draper track assembly 40 may instead, or additionally, include pairs of substantially planar low-friction elements 108 flanking the second ends 66 of each draper track 62 to reduce friction and wear between the draper tracks 62 and the cleats 33 on the return runs 38 of the first and second side draper belts 30. The low-friction elements 108 have substantially planar upward-facing sides 110 for engaging the cleats 33 on the return runs 38 of the first and second side draper belts 30. The low-friction elements 108 are secured to the horizontal top side 58 of the respective second support leg 26 adjacent the second end 66 of the draper track 62. Alternatively, the low-friction elements 108 may instead or additionally be secured to either the medial or lateral side walls 54, 56 of the respective second support leg 26. The low-friction elements 108 extend longitudinally alongside the respective draper track 62 at least part way toward the first end 64 thereof. Additionally, the upward-facing sides 110 of the low-friction elements 108 are disposed slightly above the horizontal upper portions 72 of the draper tracks 62 so that the cleats 33 on the return runs 38 of the first and second side draper belts 30 engage the low-friction elements 108 rather than the draper tracks 62 adjacent the second support legs 26.

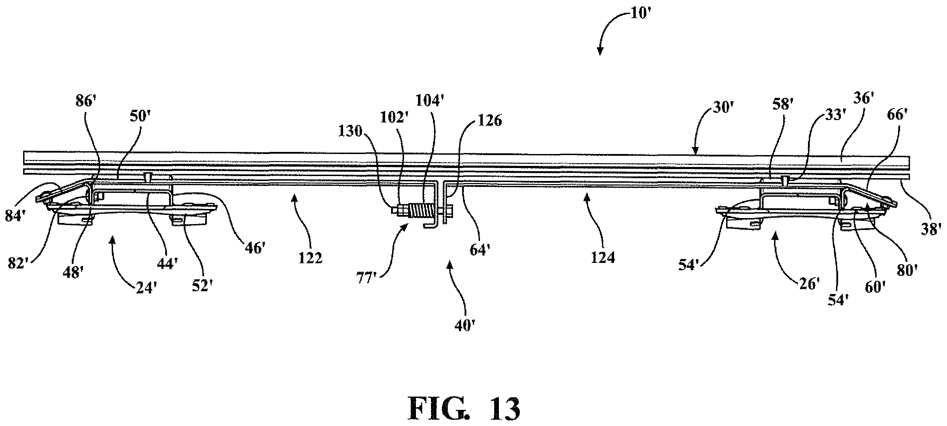

An alternative embodiment of the draper header 10 is shown in Figures 12-14, wherein like elements of the alterative embodiment include like element numbers and, as the elements are substantially similar, will not be further explained herein. The alternative tension draper track assembly 40' includes a first draper track 122 secured at the first support leg 24' and a second draper track 124 secured at the second support leg 26' with the tensioning mechanism 77' operatively coupled therebetween. The coupling brackets 80' for the alternative tension draper track assembly 40' are secured to the first and second support legs 24', 26', as shown in Figure 13. One of the coupling brackets 80' is secured to and extends substantially perpendicularly from the lateral side wall 48' of the first support leg 24' adjacent the fore end 44' thereof. Similarly, the other of the coupling brackets 80' is secured to and extends substantially perpendicularly from the medial side wall 54' of the second support leg 26' adjacent the fore end 44' thereof.

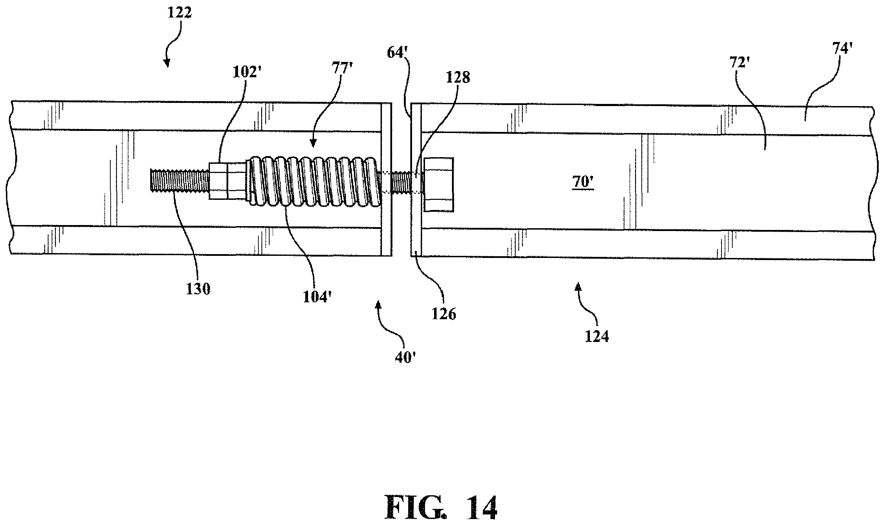

Referring to Figure 13, each of the first and second draper tracks 122, 124 extend between first 64' and opposite second ends 66'. The second end 66' of the first draper track 122 is secured to the coupling bracket 80' extending from the first support leg 24', and the second end 66' of the second draper track 124 is secured to the coupling bracket 80' extending from the second support leg 26'. The first ends 64' of each first and second draper track 122, 124 include a downwardly-extending tab 126, as shown in Figure 13 and 14. Each downwardly-extending tab 126 includes a corresponding hole 128 extending therethrough for coupling with the tensioning mechanism 77' to tension the first and second draper tracks 122, 124 across the first and second support legs 24', 26', as shown in Figures 12-14.

Referring to Figures 13 and 14, the tensioning mechanism 77' includes a threaded post, such as a bolt 130, which is received by both of the corresponding holes 128 in the downwardly-extending tabs 126 of the first and second draper tracks 122, 124. The fastening elements 102' are coupled to the bolt 130 to secure the bolt 130 through each of the corresponding holes 128 in the downwardly-extending tabs 126, thereby tensioning the first and second draper tracks 122, 124 across the first and second support legs 24', 26'. The coil spring 104' of the tensioning mechanism 77' is mounted on the bolt 130 and is at least partially compressed between one of the downwardly-extending tabs 126 and the fastening elements 102' to dampen vibrations and limit loading in the first and second draper tracks 122, 124 during use of the draper header 10', as shown in Figure 14. However, any suitable shock-absorbing element, such as an elastomeric component, may alternatively be placed between one of the downwardly-extending tabs and the nut without varying the scope of the invention. Tension of the first and second draper tracks 122, 124 across the first and second support legs 24', 26' can be increased and decreased by tightening and loosening the fastening elements 102'. More specifically, as the fastening element 102' is rotated in a first direction on the threaded bolt 130, the spring 104' is compressed between the fastening element 102' and the adjacent tab 126 and the threaded bolt 130 is pulled to increase the tension on the first and second draper tracks 122, 124. Alternatively, as the fastening element 102' is rotated in an opposite second direction on the threaded bolt 130, the threaded bolt 130 is pushed to decrease the tension on each first and second draper track 122, 124. The tension created on the first and second draper tracks 122, 124 allows for smaller and lighter weight draper tracks 122, 124 for supporting the draper belt 30' as well as a reduced number of support legs 24', 26' required to support the draper tracks 122, 124.

Referring to operation of the draper header 10, the crops to be harvested first engage the crop pick-up reel 29 and are cut by the cutter bar assembly 21. Once cut by the cutter bar assembly 21, the crops are deposited and arranged on the draper belt assembly 28 by the crop pick-up reel 29. The first and second side draper belts 30 are tensioned between the rollers 34 such that the top run 36 of each first and second side draper belt 30 transports the crops medially to the center draper belt 32. As the top run 36 of each first and second side draper belt 30 transports the crops medially to the center draper belt 32, the return run 38 of each first and second side draper belt 30 and the cleats 33 extending therefrom simultaneously engage and are supported by the first sides 68 of the draper tracks 62, which extend and are tensioned between the respective pair of first and second support legs 24, 26, as shown in Figures 3 and 4. Once deposited on the center draper belt 32, the cut crops are transported through the opening 22 in the rear portion 16 of the header frame 12 for further processing by the agricultural machine.

The invention has been described in an illustrative manner, and it is to be understood that the terminology which has been used is intended to be in the nature of words of description rather than of limitation. Directional references employed or shown in the description, figures or claims, such as top, bottom, upper, lower, upward, downward, lengthwise, widthwise, longitudinal, lateral, and the like, are relative terms employed for ease of description and are not intended to limit the scope of the invention in any respect. Many modifications and variations of the present invention are possible in light of the above teachings. It is, therefore, to be understood that within the scope of the appended claims, the invention may be practiced other than as specifically described.

## Claims

1. A draper header (10) for harvesting agricultural crops, the draper header comprising
a header frame (12) extending longitudinally between opposite first and second ends and having at least first (24) and second (26) support legs spaced apart between the first and second ends thereof;
a draper belt (30) rotatably supported by the header frame and extending across the first and second support legs for transporting harvested agricultural crops;
a tension draper track assembly (40) operatively coupled between the first and second support legs for supporting at least a portion of the draper belt, the tension draper track assembly including
an elongated draper track (62) extending between a first end (64) and an opposite second end (66), the second end of the elongated draper track secured to one of the first and second support legs, and
a tensioning mechanism (77)
**characterized in that**
the tensioning mechanism coupled between the first end of the elongated draper track and the other of the first and second support legs for tensioning the elongated draper track across the first and second support legs to support the draper belt.

2. The draper header of claim 1 wherein the draper belt includes a top run and an opposite return run spaced parallel and below the top run.

3. The draper header of claim 2 wherein the tension draper track assembly is adapted and arranged for supporting the return run of the draper belt.

4. The draper header of claim 3 wherein the tensioning mechanism includes a rod coupled to and extending from the first end of the elongated draper track.

5. The draper header of claim 4 wherein the other of the first and second support legs has a hole for receiving the rod therethrough.

6. The draper header of claim 5 wherein the tensioning mechanism further includes a fastening element for securing the rod through the hole and tensioning the elongated draper track across the first and second support legs.

7. The draper header of claim 6 wherein tension of the elongated draper track across the first and second support legs can be increased and decreased by tightening and loosening the fastening element.

8. The draper header of claim 7 wherein the tensioning mechanism further includes a spring mounted between the fastening element and the other of the first and second support legs to dampen vibrations and reduce loading in the elongated draper track during use of the draper header.

9. The draper header of claim 7 wherein the tensioning mechanism further includes an elastomeric component mounted between the fastening element and the other of the first and second support legs to dampen vibrations and reduce loading in the elongated draper track during use of the draper header.

10. The draper header of claim 8 wherein the elongated draper track includes a first and an opposite second side, the first side arranged to face and engage the draper belt.

11. The draper header of claim 10 further comprising a low-friction material covering the first side of the elongated draper track to reduce friction and wear on the draper belt as it engages the elongated draper track.

12. The draper header of claim 10 further comprising a low-friction material covering both the first and second sides of the elongated draper track to reduce friction and wear on the draper belt as it engages the elongated draper track.

13. The draper header of claim 10 further comprising a pair of low-friction elements flanking the second end of the elongated draper track to reduce friction and wear on the draper belt as it rotates across the header frame.

14. The draper header of claim 11 wherein the elongated draper track has a cross-section defined by a substantially planar horizontal upper portion extending laterally between a pair of angled side portions.

15. The draper header of claim 14 wherein the one of the first and second support legs includes a coupling bracket extending substantially perpendicularly therefrom for securing the second end of the elongated draper track to the one of the first and second support legs.

16. The draper header of claim 15 wherein the other of the first and second support legs further includes a downwardly-extending tensioning bracket through which the hole extends for receiving the rod therethrough.

17. The draper header of claim 16 wherein the tensioning mechanism further includes a pair of arms coupled to and extending from the first end of the elongated draper track for engaging the downwardly-extending tensioning bracket to limit rotation of the tension draper track assembly between the post and the downwardly-extending tensioning bracket.

18. The draper header of claim 17 wherein the elongated draper track is a material selected from the group consisting of metal, polymer, and composite.

19. The draper header of claim 18 wherein the draper belt includes a plurality of cleats extending transversely across and outwardly from the draper belt for aiding in transporting the harvested crops on the draper header.

20. The draper header of claim 19 wherein the header frame further includes a front portion and a rear portion extending longitudinally between the first and second ends thereof.

21. The draper header of claim 20 further comprising a cutter bar assembly operatively extending across the front portion of the header frame for cutting the crops to be harvested.

22. The draper header of claim 21 further comprising a rear wall extending substantially vertically from the rear portion of the header frame between the first and second ends thereof, the rear wall including an opening therethrough for transferring cut crops from the draper header.

23. The draper header of claim 22 further comprising at least one crop pick-up reel operatively coupled to the header frame for engaging the crops to be harvested.

## Patentansprüche

1. Erntevorsatz (10) zum Ernten von landwirtschaftlichem Erntegut, wobei der Erntevorsatz umfasst:
einen Kopfrahmen (12), der sich in Längsrichtung zwischen gegenüberliegenden ersten und zweiten Enden erstreckt und mindestens ein erstes (24) und ein zweites (26) Stützbein aufweist, die zwischen dem ersten und dem zweiten Ende desselben beabstandet sind;
ein Schlepperband (30), das drehbar am Rahmen des Schneidwerks gelagert ist und sich über die ersten und zweiten Stützbeine erstreckt, um geerntete landwirtschaftliche Erzeugnisse zu transportieren;
eine Spann-Trockenlegervorrichtung (40), die funktionsfähig zwischen den ersten und zweiten Stützbeinen gekoppelt ist, um mindestens einen Teil des Trockenlegungsbandes zu tragen, wobei die Spann-Trockenlegervorrichtung Folgendes umfasst
eine langgestreckte Draperbahn (62), die sich zwischen einem ersten Ende (64) und einem gegenüberliegenden zweiten Ende (66) erstreckt, wobei das zweite Ende der langgestreckten Draperbahn an einem der ersten und zweiten Stützbeine befestigt ist, und
einen Spannmechanismus (77), **dadurch gekennzeichnet, dass** der Spannmechanismus zwischen dem ersten Ende der langgestreckten Draperbahn und dem anderen der ersten und zweiten Stützbeine gekoppelt ist, um die langgestreckte Draperbahn über die ersten und zweiten Stützbeine zu spannen, um das Draperband zu stützen.

2. Erntevorsatz nach Anspruch 1, wobei das Draper-Band ein oberes Trum und ein gegenüberliegendes Rücklauftrum aufweist, das parallel und unterhalb des oberen Trums angeordnet ist.

3. Erntevorsatz nach Anspruch 2, wobei die Draper-Spannschienenbaugruppe zur Unterstützung des Rücklaufs des Draper-Bandes geeignet und angeordnet ist.

4. Erntevorsatz nach Anspruch 3, wobei der Spannmechanismus eine Stange umfasst, die mit dem ersten Ende der langgestreckten Draper-Schiene verbunden ist und sich von diesem Ende aus erstreckt.

5. Erntevorsatz nach Anspruch 4, wobei der andere der beiden Stützfüße ein Loch zur Aufnahme der Stange aufweist.

6. Erntevorsatz nach Anspruch 5, wobei der Spannmechanismus ferner ein Befestigungselement zum Befestigen der Stange durch das Loch und zum Spannen der langgestreckten Draper-Schiene über die ersten und zweiten Stützbeine umfasst.

7. Erntevorsatz nach Anspruch 6, wobei die Spannung der langgestreckten Draper-Schiene über die ersten und zweiten Stützbeine durch Anziehen und Lösen des Befestigungselements erhöht und verringert werden kann.

8. Erntevorsatz nach Anspruch 7, wobei der Spannmechanismus ferner eine Feder umfasst, die zwischen dem Befestigungselement und dem anderen der ersten und zweiten Stützbeine angebracht ist, um Vibrationen zu dämpfen und die Belastung in der langgestreckten Draper-Schiene während der Verwendung des Draper-Kopfstücks zu verringern.

9. Erntevorsatz nach Anspruch 7, wobei der Spannmechanismus ferner eine Elastomerkomponente umfasst, die zwischen dem Befestigungselement und dem anderen der ersten und zweiten Stützbeine angebracht ist, um Vibrationen zu dämpfen und die Belastung in der langgestreckten Draper-Bahn während der Verwendung des Draper-Kopfstücks zu verringem.

10. Erntevorsatz nach Anspruch 8, wobei die langgestreckte Draper-Schiene eine erste und eine gegenüberliegende zweite Seite aufweist, wobei die erste Seite so angeordnet ist, dass sie dem Draper-Band zugewandt ist und mit diesem in Eingriff steht.

11. Erntevorsatz nach Anspruch 10 ferner umfassend ein reibungsarmes Material, das die erste Seite der langgestreckten Draper-Spur bedeckt, um die Reibung und den Verschleiß des Draper-Bandes zu verringern, wenn es in die langgestreckte Draper-Spur eingreift.

12. Erntevorsatz nach Anspruch 10 ferner umfassend ein reibungsarmes Material, das sowohl die erste als auch die zweite Seite der langgestreckten Erntegutbahn bedeckt, um die Reibung und den Verschleiß des Erntegutbandes zu verringern, wenn es mit der langgestreckten Erntegutbahn in Eingriff kommt.

13. Erntevorsatz nach Anspruch 10 ferner umfassend ein Paar reibungsarme Elemente, die das zweite Ende der länglichen Draper-Spur flankieren, um die Reibung und den Verschleiß des Draper-Bandes zu verringern, wenn es sich über den Header-Rahmen dreht.

14. Erntevorsatz nach Anspruch 11, wobei die langgestreckte Draper-Schiene einen Querschnitt aufweist, der durch einen im Wesentlichen ebenen, horizontalen oberen Abschnitt definiert ist, der sich seitlich zwischen einem Paar abgewinkelter Seitenabschnitte erstreckt.

15. Erntevorsatz nach Anspruch 14, wobei das eine der ersten und zweiten Stützbeine einen Verbindungsbügel aufweist, der sich im Wesentlichen senkrecht davon erstreckt, um das zweite Ende der länglichen Draper-Schiene an dem einen der ersten und zweiten Stützbeine zu befestigen.

16. Erntevorsatz nach Anspruch 15, wobei das andere der ersten und zweiten Stützbeine ferner eine sich nach unten erstreckende Spannhalterung aufweist, durch die sich das Loch zur Aufnahme der Stange erstreckt.

17. Erntevorsatz nach Anspruch 16, wobei der Spannmechanismus ferner ein Paar Arme umfasst, die mit dem ersten Ende der länglichen Draper-Schiene gekoppelt sind und sich von dort aus erstrecken, um mit der nach unten ragenden Spannhalterung in Eingriff zu kommen, um die Drehung der Draper-Schienenanordnung zwischen dem Pfosten und der nach unten ragenden Spannhalterung zu begrenzen.

18. Erntevorsatz nach Anspruch 17, wobei die langgestreckte Draper-Schiene aus einem Material besteht, das aus der Gruppe ausgewählt ist, die aus Metall, Polymer und Verbundwerkstoff besteht.

19. Erntevorsatz nach Anspruch 18, wobei das Draper-Band eine Vielzahl von Stollen aufweist, die sich quer über das Draper-Band und von diesem nach außen erstrecken, um den Transport des geernteten Ernteguts auf dem Draper-Header zu unterstützen.

20. Erntevorsatz nach Anspruch 19, wobei der Vorsatzrahmen außerdem einen vorderen und einen hinteren Teil aufweist, die sich in Längsrichtung zwischen dem ersten und dem zweiten Ende des Rahmens erstrecken.

21. Erntevorsatz nach Anspruch 20 umfasst ferner eine Schneidbalkenanordnung, die sich betriebsmäßig über den vorderen Teil des Schneidwerksrahmens erstreckt, um das zu erntende Erntegut zu schneiden.

22. Erntevorsatz nach Anspruch 21, das ferner eine Rückwand umfasst, die sich im Wesentlichen vertikal vom hinteren Teil des Kopfstückrahmens zwischen dem ersten und dem zweiten Ende desselben erstreckt, wobei die Rückwand eine Öffnung für den Transport des geschnittenen Ernteguts aus dem Draper-Kopfstück aufweist.

23. Erntevorsatz nach Anspruch 22 ferner umfassend mindestens eine Erntegut-Aufnahmespule, die mit dem Rahmen des Vorsatzgerätes verbunden ist, um das zu erntende Erntegut zu erfassen.

## Revendications

1. Une tête de drapage (10) pour la récolte des cultures agricoles, la tête d'abattage comprenant :
un cadre de tête (12) s'étendant longitudinalement entre les première et deuxième extrémités opposées et comportant au moins une première (24) et une deuxième (26) pattes de support espacées entre les première et deuxième extrémités ;
une courroie d'arrachage (30) supportée de manière rotative par le cadre de la tête de récolte et s'étendant à travers les premier et deuxième pieds de support pour transporter les cultures agricoles récoltées ;
un ensemble de rails de traction (40) couplé de manière opérationnelle entre le premier et le second pied de support pour supporter au moins une partie de la courroie de traction, l'ensemble de rails de traction comprenant
un rail de drapage allongé (62) s'étendant entre une première extrémité (64) et une deuxième extrémité opposée (66), la deuxième extrémité du rail de drapage allongé étant fixée à l'une des première et deuxième jambes de support, et
un mécanisme de tension (77) **caractérisé par le fait que** le mécanisme de tension est couplé entre la première extrémité du rail de drapage allongé et l'autre des premier et deuxième pieds de support pour tendre le rail de drapage allongé à travers les premier et deuxième pieds de support afin de soutenir la courroie de drapage.

2. La tête de drapage de la revendication 1, dans laquelle la courroie de drapage comprend une course supérieure et une course de retour opposée, espacée parallèlement et en dessous de la course supérieure.

3. La tête de drapage de la revendication 2, dans laquelle l'ensemble de la piste d'étirage est adapté et disposé pour supporter la course de retour de la courroie d'étirage.

4. La tête de drapagede la revendication 3, dans laquelle le mécanisme de tension comprend une tige couplée à la première extrémité de la piste de drapier allongée et s'étendant à partir de celle-ci.

5. La tête de drapage de la revendication 4, dans laquelle l'autre jambe de support, la première et la seconde, est percée d'un trou pour recevoir la tige.

6. La tête de drapage de la revendication 5, dans laquelle le mécanisme de tension comprend en outre un élément de fixation pour sécuriser la tige à travers le trou et tendre le rail de drapage allongé à travers les première et deuxième jambes de support.

7. La tête de drapage de la revendication 6 dans laquelle la tension de la piste de drapage allongée à travers les première et deuxième jambes de support peut être augmentée et diminuée en serrant et en desserrant l'élément de fixation.

8. La tête de drapage de la revendication 7 dans laquelle le mécanisme de tension comprend en outre un ressort monté entre l'élément de fixation et l'autre de la première et de la seconde jambe de support pour amortir les vibrations et réduire la charge dans la piste de drapage allongée pendant l'utilisation de la tête de drapage.

9. La tête de drapage de la revendication 7, dans laquelle le mécanisme de tension comprend en outre un composant élastomère monté entre l'élément de fixation et l'autre des première et deuxième jambes de support pour amortir les vibrations et réduire la charge dans la piste de drapage allongée pendant l'utilisation de la tête de drapage.

10. La tête de drapage de la revendication 8, dans laquelle la piste de drapage allongée comprend un premier et un second côté opposé, le premier côté étant disposé de manière à faire face à la courroie de drapage et à s'y engager.

11. La tête de drapage de la revendication 10 comprend en outre un matériau à faible friction recouvrant le premier côté de la piste de drapage allongée pour réduire la friction et l'usure de la courroie de drapage lorsqu'elle s'engage dans la piste de drapage allongée.

12. La tête de drapage de la revendication 10 comprend en outre un matériau à faible friction recouvrant à la fois le premier et le second côté de la piste de drapage allongée pour réduire la friction et l'usure de la courroie de drapage lorsqu'elle s'engage dans la piste de drapage allongée.

13. La tête de drapage de la revendication 10 comprend en outre une paire d'éléments à faible friction flanquant la deuxième extrémité de la piste de drapage allongée pour réduire la friction et l'usure de la courroie de drapage lorsqu'elle tourne sur le cadre de la tête de drapage.

14. La tête de drapage de la revendication 11, dans laquelle la piste de drapage allongée a une section transversale définie par une partie supérieure horizontale sensiblement plane s'étendant latéralement entre une paire de parties latérales inclinées.

15. La tête de drapage de la revendication 14, dans laquelle l'un des premiers et seconds pieds de support comprend un support d'accouplement s'étendant sensiblement perpendiculairement à partir de celui-ci pour fixer la seconde extrémité du rail de drapage allongé à l'un des premiers et seconds pieds de support.

16. La tête de drapage de la revendication 15, dans laquelle l'autre des première et deuxième jambes de support comprend en outre un support de tension s'étendant vers le bas à travers lequel le trou s'étend pour recevoir la tige à travers.

17. La tête de drapage de la revendication 16, dans laquelle le mécanisme de tension comprend en outre une paire de bras couplés à et s'étendant à partir de la première extrémité de la piste de drapage allongée pour engager le support de tension s'étendant vers le bas afin de limiter la rotation de l'ensemble de la piste de drapage entre le poteau et le support de tension s'étendant vers le bas.

18. Le collecteur de drapage de la revendication 17, dans lequel le rail de drapage allongé est un matériau choisi dans le groupe constitué par le métal, le polymère et le composite.

19. La tête de drapage de la revendication 18, dans laquelle la courroie de drapage comprend une pluralité de taquets s'étendant transversalement et vers l'extérieur de la courroie de drapage pour faciliter le transport des cultures récoltées sur la tête de drapage.

20. La tête de drapage de la revendication 19, dans laquelle le cadre de la tête comprend en outre une partie avant et une partie arrière s'étendant longitudinalement entre la première et la deuxième extrémité.

21. La tête de drapage de la revendication 20 comprend en outre un ensemble de barres de coupe s'étendant de manière opérationnelle à travers la partie avant du cadre de la tête pour couper les cultures à récolter.

22. La tête de drapagede la revendication 21 comprend en outre une paroi arrière s'étendant sensiblement verticalement à partir de la partie arrière du cadre de la tête entre ses première et deuxième extrémités, la paroi arrière comprenant une ouverture à travers celle-ci pour transférer les récoltes coupées de la tête d'égouttage.

23. La tête de drapage de la revendication 22 comprend en outre au moins un enrouleur de récolte couplé de manière opérationnelle au cadre de la tête pour engager les cultures à récolter.
